# EUROPEAN PATENT SPECIFICATION

(11) **EP 4 090 907 B1**
(45) Date of publication and mention of the grant of the patent: **04.06.2025**
(21) Application number: 21700733.5
(22) Date of filing: 14.01.2021
(51) Int. Cl.: F41H 5/02, F41H 5/04, B64C 1/18, B64C 27/04, B64D 7/00, B32B 3/12, B32B 3/18, B32B 3/26, B32B 5/02, B32B 5/18, B32B 5/24, B32B 15/14, B32B 15/20, B32B 5/26

(54) **AIRCRAFT STRUCTURAL, ANTI-BALLISTIC FLOOR PANEL**
ANTIBALLISTISCHE BODENPLATTE EINER FLUGZEUGSTRUKTUR
PANNEAU DE PLANCHER ANTI-BALISTIQUE DE STRUCTURE D'AÉRONEF

(30) Priority: 14.01.2020 NL 2024672
(43) Date of publication of application: 23.11.2022
(73) Proprietor: Fokker Aerostructures B.V., 3351 LB Papendrecht (NL)
(72) Inventor: DEKKER, Erik, 7903 AN Hoogeveen (NL)
(74) Representative: D Young & Co LLP
(86) International application number: PCT/EP2021/050732
(87) International publication number: WO 2021/144383

(56) References cited:
- EP-A1- 3 296 194
- WO-A1-2009/096956
- WO-A1-2018/199744
- US-A1- 2014 238 224

## Description

### Background

The present invention is concerned with a structural panel particularly, but not exclusively, for use in an aircraft or a rotorcraft such as a helicopter.

The floors of aircraft must be made to withstand numerous forces and meet numerous operational requirements. For example, the floors must integrate with the fuselage and provide the necessary stiffness. They must also be strong enough to support internal loads, for example from passengers and/or cargo and must not unduly wear. Weight is also an essential feature and the flooring design must be as light as possible.

The difficulties of aircraft design are further compounded when ballistic requirements are introduced. For example, aircraft being used in areas of conflict are often the target of ballistics from the ground such as rifle or hand gun projectiles. In such circumstances the flooring of an aircraft can be modified to absorb ballistics impacting the aircraft. In particular this is achieved by adding a supplemental layer to the inside of the aircraft (sometimes referred to as 'add-on' armour). Such a layer (depending on the threat level) can comprise hard and brittle materials (such as ceramics and steels), combined with spall liners, that absorb the impact and prevent the projectile from penetrating into the aircraft cabin or cargo area.

Such flooring modifications allow the aircraft to operate in dangerous regions and allow for the protection of the occupants, pilots and also cargo. However, the flooring modifications can add significant weight to the aircraft which is detrimental to payload capacity. A balance is therefore struck between the ballistic properties of the floor structure and the payload capacity required of the aircraft. Advantageously the modified panels /add-on armor can be removed thereby restoring the payload capacity when ballistic protection is not required.

The inventor has devised an unconventional modified composite floor arrangement that has equivalent structural behaviour compared to a standard composite floor, but introduces a high level of ballistic protection and minimizes the effect on the payload capacity of the aircraft.

More specifically an unconventional modified floor arrangement is described herein which not only provides superior ballistic protection but also minimises the effect on the payload capacity of the aircraft. This advantageously allows for fewer flights to transport a given quantity of material or number of passengers.

WO 2009/096956 Al refers to a protective armor structure.

### Summary of the Invention

Aspects of the invention are set out in the accompanying claims.

Viewed from a first aspect of an invention described herein, there is provided an anti-ballistic aerospace structure, said structure comprising a strike layer defining an outwardly facing surface and an opposing capture layer defining an inwardly facing surface and an intermediate structural layer arranged between the strike layer and capture layer, wherein the intermediate structural layer is spaced relative to the strike layer to define a space between the intermediate structural layer and the strike layer, said space comprising one or more reinforcement elements, wherein the strike layer, the intermediate structural layer and the one or more reinforcement elements together form a sandwich-structured composite and wherein the strike layer is formed of a fibre reinforced plastic laminate comprising at least one metallic layer, wherein the metallic layer comprises a plurality of apertures passing all the way through the metallic layer.

In effect, a composite aerospace structure with added anti-ballistic properties is provided, said structure comprising a typical sandwich composition with a bottom and top structural face, spaced relative to each other and said space comprising one or more reinforcement elements, wherein the bottom sandwich face, facing outwards, acts as a strike face or layer and is formed of a fiber reinforced plastic laminate comprising at least one metallic layer, and an additional - non-structural - capture layer is positioned on top of the opposing structural sandwich face - the intermediate structural layer - facing inwards. Such an arrangement provides an unconventional structure capable of arresting the movement of a projectile. In effect, an anti-ballistic structure or panel is provided.

The term 'anti-ballistic' is intended to refer to the prevention of movement of a ballistic projection, such as a bullet.

Advantageously incorporating a metallic layer within the strike layer substantially improves the structural performance of the panel. Specifically, the combination of the intermediate structural layer and the metallic layer contained within the strike layer provides a synergy in that the two layers provide a structural capability to the antiballistic structure.

This structural capability advantageously allows the structure to be used as a load bearing part of the structure of an aircraft as opposed, with conventional arrangement, to merely an add-on structure. In effect, the anti-ballistic properties provided by the structure can be combined with the structural properties of the structure in aircraft design. By replacing a number of fiber reinforced plastic layers by a metallic layer in the structural sandwich bottom face, the structural performance and behaviour can be made equivalent, but the metal layer contained within the bottom face, provides synergy in that the combination provides an anti-ballistic structure to the structural capability.

This anti-ballistic capability advantageously allows the structure to be used as an armor as well as a load bearing part as opposed, with conventional arrangement, to merely a structural panel in need of add-on armor. In effect the structural properties of the aircraft design can be combined with the anti-ballistic properties provided by the structure.

According to an invention described herein a multi-layered structure is provided for use, particularly, but not exclusively, for the floor of an aircraft such as a helicopter. As discussed above, advantageously the sandwich laminate structure effectively has a load bearing capability owing to the arrangement of layers within the structure.

The sandwich core spaces the strike face or layer, intermediate structure layer and capture layer thereby increasing the structural performance of the arrangement and improving the rigidity of the structure. The structure is thereby able to support loads and can be incorporated into the fuselage of the aircraft. In effect the structure can be integrated as part of the aircraft fuselage.

Furthermore, by forming the innermost facing surface of the structure (the capture layer) from a (non-structural) ultra-high molecular weight polyethylene (UHMwPE) or equivalent spall liner material, the structure is able to perform as an anti-ballistic panel.

The panel structure is arranged with a strike surface against which a projectile would strike if it were to hit the aircraft. The strike face layer may itself (partially) stop the projectile or it may be penetrated by the projectile, thus entering the sandwich core. However, the probability is high that (depending on projectile type) either the projectile's trajectory will be disrupted causing the projectile to rotate and turn or deformed heavily, as it passes through the strike face layer and through the sandwich core. The projectile may then pass through the core and intermediate structural layer and ultimately meet with the capture layer /spall liner. Here, the projectile comes into contact with e.g. the fibres of the ultra-high molecular weight polyethylene which are able to arrest the movement of the projectile preventing the projectile leaving the structure.

It will be appreciated from the discussion above that a structure is provided which can be integrated into the fuselage design of an aircraft whilst simultaneously providing a level of ballistic protection.

Using such an arrangement thereby negates the need for bespoke anti-ballistic add-on layers within the aircraft compartment or cargo area. This advantageously reduces the overall weight of applying a ballistic system to an aircraft and increases the payload capacity of an aircraft with a ballistic system.

The metallic layer within the strike layer may advantageously comprise a plurality of apertures passing all the way through the metallic layer. The apertures may be (but not limited to) in the form of an array of generally circular holes extending across and through the layer.

Counterintuitively the holes or apertures passing all of the way through the metallic layer enhance the panel even though the through holes weaken the structure, making it less stiff in-plane. Although one might consider more material in the path of the projectile as being beneficial to stopping an incoming projectile, it has been established that during these highly dynamic events, asymmetric loading of the incoming projectile is the key mechanism needed to effectively disturb the movement of the projectile; especially projectiles with a hard core or tip. Having the maximum delta in terms of mass and inertia (i.e. a hole next to a piece of solid material) going through the strike face layer, results in the asymmetric loading and inherent projectile failure/break up behaviour.

The purpose of the apertures is twofold:
1. To disrupt the shape, trajectory or path of flight of the projectile or object approaching the aircraft fuselage by loading the projectile or object asymmetrically; and
2. To reduce the in-plane stiffness of the metal layer enabling it to be introduced as an equivalent layer (in comparison to a fiber reinforced plastic layer) within a composition of layers to form a (balanced), fiber reinforced plastic composite sandwich structure together with the structural sandwich core and back face (intermediate structural layer).

The apertures' size may be selected based on the anticipated size (calibre) of the projectiles which may be directed at the aircraft. For example, the apertures may be circular holes extending through the strike layer having a diameter of ~0.9 times the diameter of the smallest anticipated projectile calibre.

In effect the plurality of apertures reduces the weight and rigidity of the layer thereby allowing it to be incorporating conveniently into a curable structure such as a fibre reinforced plastic (FRP). Specifically, the metallic layer may be embedded on one or both sides between one or more fibre reinforced plastic layers. For example, a carbon fibre reinforced material may be used in which a plurality of resin impregnated layers may be layered up to incorporate the metallic layer as one of the layers. Specifically, pre-perforated strike faces become useful to be introduced into (less stiff) fibre reinforced plastic laminates because of the reduction in in-plane stiffness due to lack of material (i.e. holes or slits for example).

The metallic layer may be any suitable material. However, titanium or an alloy thereof provides high strength, toughness and low weight.

As one example, a titanium (Ti-6al-4v) plate with ~40% material reduced, has approximately the same in-plane stiffness as a quasi-isotropic carbon fiber (e.g. intermediate modulus carbon fiber) laminate (or lamina, depending on lamina composition like 50/50 weave or multi-axial).

The fibre reinforced plastic may be any suitable material such as a carbon fibre reinforced plastic which has low weight and high strength and stiffness.

Determining the dimensions of the layers can be established by a person skilled in the art of classical laminate theory (CLT). By using this theory, overall properties of compositions of e.g. highly orthotropic (unidirectional) or quasi-isotropic (woven) fiber laminate can be calculated. Specifically, the laminate composition may be selected in such way that the overall behaviour of the opposing face (intermediate structural layer) would exhibit the same (quasi) isotropic behaviour as what is to be expected from the metal face with its specific hole pattern embedded in a number of fiber reinforced plastic laminae. Since the hole pattern can be chosen as circular holes, slits, or the equivalent of whatever is necessary to deform the approaching projectile, the opposing face laminate can be tailored to match this. The in-plane stiffness of the metal face is far less difficult to calculate, since most metals exhibit isotropic behaviour. With intricate patterns in the metal layer, FEA (Finite Element Analysis) can be used to calculate the in-plane stiffness.

The capture layer is arranged to arrest the movement of any projectile that passes through the strike layer and the layers between the strike layer and the capture layer. Advantageously the capture layer may be formed of an ultra-high molecular weight polyethylene material. Such materials exhibit extreme tensile strength and - being usually composed of multiple fibrous layers with (deliberate) poor inter-laminar shear strength - are able to deform excessively upon impact which allows for an optimal use of said tensile strength to arrest the projectile. The arrangement described herein advantageously increases the probability, by virtue of the space or separation defined between the strike layer and capture layer, that a projectile will make contact with the capture layer at least partially in a sideways orientation (increasing the surface area of the projectile and reducing the probability of the projectile penetrating the capture layer, since more material is effectively addressed). This improves the probability that the movement of the projectile can be arrested by the capture layer.

Various materials may be used for the capture layer. Advantageously, the ultra-high molecular weight polyethylene material may be Dyneema ^{®} manufactured by DSM, Kevlar or another aramid fibre material or typical spall liner material could also be used.

The intermediate structural layer may also advantageously be formed of a fibre reinforced plastic material. This not only allows for a reduction in weight but also allows for convenient manufacture into a required shape or provide. Furthermore, the use of fibre reinforce plastic for the intermediate structural layer and the strike layer allows for co-curing of the structure together into a single homogeneous and balanced structure having high strength, stiffness and low weight.

Similarly in an arrangement where the reinforcement elements are in the form of ribs or other structure components extending between the intermediate structural layer (top sandwich face) and strike layer (bottom sandwich face), these may also be formed using fibre reinforced plastic and additionally co-cured with the strike and intermediate structural layer. In effect a composite sandwich, or 'box structure' in case of discretely stiffened by ribs, is formed having low weight and high strength. Advantageously, as discussed above, the possibility of the metallic layer forming a sub-layer of the strike layer allows such a metallic layer to be co-cured into a homogenous panel structure as described herein.

The reinforcement elements extending between the intermediate structural layer and the strike layer may be any suitable arrangement based on the structural requirements of the aircraft panel. The elements increase the rigidity of the sandwich structure. In one arrangement the one or more reinforcement elements may be in the form of a plurality of ribs extending between the strike layer and the intermediate structural layer. Such ribs may be conveniently co-cured with the rest of the structure during manufacture. The ribs may be, for example, I beams, blade stiffeners or hat stiffeners extending between the two layers.

In an alternative arrangement the one or more reinforcement elements may be in the form of a foam, honeycomb or similar 'core' material. Such materials are extremely light (low density) but may provide the rigidity and shear strength needed between the intermediate structural layer and the strike layer for structural loading. In such an arrangement the core material may fill the entire space between the two layers.

As discussed above, advantageously, the strike layer, reinforcement elements and intermediate structural layer may be co-cured layers within the structure. This allows a single body structure to be formed using conventional FRP manufacturing techniques that will be well understood by a person skilled in the art of composite manufacturing.

Viewed from another aspect there is provided a method of forming an anti-ballistic aerospace structure, said structure comprising a strike layer defining an outwardly facing surface and an opposing capture layer defining an inwardly facing surface and an intermediate structural layer arranged between the strike layer and capture layer, wherein the intermediate structural layer is spaced relative to the strike layer to define a space between the intermediate structural layer and the strike layer, said space comprising one or more reinforcement elements, wherein the strike layer, the intermediate structural layer and the one or more reinforcement elements together form a sandwich-structured composite and wherein the strike layer is formed of a fibre reinforced plastic laminate comprising at least one metallic layer, wherein the metallic layer comprises a plurality of apertures passing all the way through the metallic layer; wherein the method comprises the steps of laying-up the strike layer to incorporate the metallic layer and co-curing the strike layer, the reinforcement elements and intermediate structural layer of the structure.

In an arrangement where the spall liner / capture layer material is composed of the Dyneema variant, it is necessary to (cold) bond this layer separately to the cured structural sandwich composite (with integrated strike layer) due to the material and process used to make the Dyneema material. An autoclave or similar (hot) bonding process will alter the Dyneema performance. Since the spall liner is not considered a structural part of the panel design, it can be bonded separately.

If a similar matrix material (like epoxy resin) is used in conjunction with an aramid fiber based spall liner/ capture layer (the material combination epoxy/aramid is not uncommon), then it would be possible to have a single cure.

According to a method described herein an anti-ballistic panel or structure may be formed in which a metallic layer is integrally combined into a fibre reinforced plastic structure. In combination with a capture layer, such as a Dyneema or other material, a panel is provided that advantageously provides structural properties and anti-ballistic properties in a single structure.

The strike layer, intermediate structural layer and potentially the reinforcement elements may be co-cured during a single curing operation (for example in or out of autoclave).

The capture layer may then be bonded to or brought into contact with (using a suitable housing) the upper or outer surface of the intermediate structural layer to form the overall structural panel.

Advantageously a backing layer may additionally be bonded or connected to the inwardly facing surface of the structure. This may then provide a working surface on which passengers can walk or loads may be placed. This advantageously protects the structure and additionally retains the shape of the capture layer.

Advantageously, because of the ability for the structure to be formed of fibre reinforced plastic, in combination with a metallic layer, it is possible to form the structure into non-planar shapes. For example, an aerodynamic shape may be used in which the metallic layer is pressed or formed into the desired shape and the remaining layers layed-up around it (parallel) and the entire component co-cured to provide a finished and intricately shaped anti-ballistic structure.

Viewed from a still further aspect there is provided a fibre reinforced plastic structure comprising a strike layer defining an outwardly facing surface and an opposing capture layer defining an inwardly facing surface and an intermediate structural layer arranged between the strike layer and capture layer, wherein the intermediate structural layer is spaced relative to the strike layer to define a space between the intermediate structural layer and the strike layer, said space comprising one or more reinforcement elements, wherein the strike layer, the intermediate structural layer and the one or more reinforcement elements together form a sandwich-structured composite and wherein the strike layer is formed of a fibre reinforced plastic laminate comprising at least one metallic layer, wherein the metallic layer comprises a plurality of apertures passing all the way through the metallic layer.

It will be recognised that such a structure which is capable of providing both structural performance as well as anti-ballistic performance may be employed in many applications. For example, protective structures around manufacturing or other areas where high velocity projectiles may be released would be applications for the technology. Blast walls or testing facility structures may also benefit from such an arrangement if a stiff and light weight construction is indispensable.

Aspects of inventions described herein extend to aircraft such as helicopters or aircraft structures incorporating such a panel.

### Drawings

Aspects of the invention will now be described, by way of example only, with reference to the accompanying figures in which:
Figure 1 shows a schematic of a structure according to an invention herein;
Figure 2 illustrates the distribution of apertures through the metallic layer in one arrangement of an invention described herein; and
Figure 3 illustrates movement and failure mechanism of various projectiles through the structure.

Specific embodiments are shown by way of example in the drawings and are herein described in detail. It should be understood however that drawings and detailed description attached hereto are not intended to limit the invention to the particular form disclosed.

### Detailed Description

An invention described herein has particularly advantageously applications in aircraft design.

The example below focusses on such an application. However, the structure may equally be used in other application where the novel combination of structure performance and ballistic protection is needed. For example, other parts of an aircraft (e.g. the cockpit) may equally benefit. Other applications include general structures such as buildings or even automobiles. The arrangement described herein may also be applied to non-planar panels; even double curved panelling provided the strike face layer and capture layer/ spall liner remain parallel and equidistant.

Focussing on the example application of the aerospace industry, floors for fixed wing and rotorcraft aircraft are designed for usage loads (airframe loads, and/or loads resulting from cargo and/or loads resulting from troops). The floor panels are designed for these loads (including impact and wear and tear) only and have no / negligible anti-ballistic function.

To protect occupants and/or cargo, an anti-ballistic protection system has to be added. Conventional arrangements involve an anti-ballistic protection system being added separately, on top of or below the structural floor, and at the (lower) side panels of the fuselage, often consisting of special grades of ceramic, steel, or other metal materials and also sometimes other material compositions whose only function is to stop the projectile. Such conventional arrangements add significant weight and cost. They also occupy additional space. In many cases it also poses a logistical disadvantage due to the inherent fact that the armour is separable. However, the main advantage of a separate anti-ballistic protection system is that some of these systems can be easily removed when the anti-ballistic protection is not necessary.

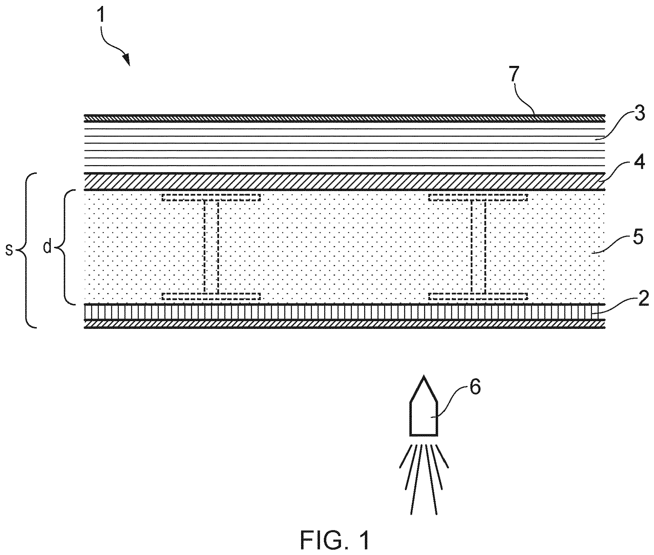

Figure 1 shows the general arrangement of a structure according to an invention described herein.

The arrangement shown is a typical composition of a (monolithic) 'spaced armour' solution comprising a strike face 2 and spall liner (catching or capture layer) 3 with some space in between 4, 5. The term 'spaced armour' refers to an arrangement in which the strike face and spall liner, or other secondary (and or tertiary) face are not directly connected but have a certain stand-off.

The arrangement described herein uses a titanium alloy for the strike face and a specific hard-armour Dyneema solution for the spall liner. In a conventional armour composition, these functions can be fulfilled by strike face materials such as ceramics, other metallic alloys like aluminum or armour steel. The spall liner material may be e.g. an aramid fiber based hard armor plates (Kevlar) or even soft metal alloys).

However; according to the invention described herein by utilizing/adopting a 'perforated armor', some of these problems associated with existing structures can be made to disappear. As aforementioned, a perforated armor strike face comprises a repeating pattern of numerous holes/ perforations (can be e.g. circular holes, slits, cross-shapes, triangles; completely chosen/tailored for a certain set of threats) which effectively reduces the amount of material in the strike face.

The reduction in (isotropic) material also means that a proportional reduction in stiffness (and structural 'layer' strength; but is less important; especially for sandwich balance) is created. The combination of the correct material (w.r.t. small CTE difference compared to fiber reinforced composite material) for the strike face, correct thickness for structural performance and anti-ballistic effect and correct hole pattern (to effectively affect the set of threats) and reducing the amount of stiffness to be equal to the stiffness of a same-thickness fibre reinforced composite, has enabled the inventor to replace a conventional structure with a partially metallic strike face (the bottom sandwich face) with similar structural performance, but with the added function of strike face for incoming projectiles.

For example ~40% of the titanium strike face material (by the hole pattern) may be removed which reduces the original in-plane stiffness of the titanium by 40% (using a repetitive set of perforations that enable the strike face to keep exhibiting quasi-isotropic behaviour). The in-plane stiffness of the quasi-isotropic carbon fiber reinforced plastic in the top skin of the sandwich is equal to the new stiffness of the perforated titanium, which provides for a balanced overall laminate. Orthotropic designs can also be formed provided that the amount of orthotropy is similar for top and bottom face for a laminate to be balanced. If desired, also non-balanced laminates can be created. The metal strike face layer having sufficient material removed to lower the in-plane stiffness to the same level as the other fibre reinforced laminate, can be considered an equivalent, same stiffness (quasi-isotropic) layer to be combined in any fibre reinforced plastic laminate composition.

By embedding the metal strike face layer (single layer) in a small number of fiber reinforced composite layers, 'splicing' techniques known to fibre reinforced composite structures can be utilized to advantageously redistribute loads around strike face edges and at e.g. panel interfaces.

A specific embodiment of the invention will now be described in more detail with reference to figures 1 to 3.

Referring again to figure 1, the structure 1 comprises a first, metallic strike face surface or layer 2 facing down towards the ground in flight. In one example the layer is a titanium layer and comprises a plurality of apertures or holes extending through the layer. In effect the layer is perforated with holes. The holes in the face layer are distributed across the surface and reduce the in-plane stiffness of the layer 2. The reduction in stiffness is selected to correspond with the stiffness of the upper parts of the sandwich structure (intermediate structural layer) 4, as described further below. Thus, advantageously, a balanced sandwich structure can be formed.

The metallic strike face 2 can itself either be embedded in a thin layer of fibre reinforced composite and or bonded to the rest of the structure using adhesive film materials. Embedding the layer in a composite or using adhesive film material in this way advantageously allows the entire structure, including the metallic layer, to be co-cured during manufacture. To ensure strength and reliability of the integrated metallic layer, proper surface treatment (like the application of adhesive primers) should be performed.

The structure comprises a capture layer /spall liner 3 which faces upwards and towards the inside of the aircraft (not shown). The capture or spall layer functions to arrest the movement of any projectile or part/remnant thereof that has passed through the lower layers of the structure. This prevents a projectile leaving the structure and entering into the aircraft to which the structure is connected.

An intermediate structural layer 4 is provided as shown in figure 1. This layer acts as the opposite/top layer/face of the sandwich structure which is formed by the combination of the strike face layer 2 and the layer 4. A separation d is provided between the two opposing surfaces 2, 4.

This separation is key for delivering both the moment of inertia (necessary for the stiffness and structural performance of the structural panel) as well as the 'time' for the projectile to further divert from its initial trajectory, orientation and or shape, being affected by the metallic strike layer when passing through it, on its way to the capture layer.

A discrete reinforcement (described further below) structure (such as ribs or stiffeners) or core 5 is located within this space d. In the example in figure 1, the reinforcement arrangement is in the form of a plurality of ribs (dotted line) or a foam core (discrete dots) (discussed below). The structural sandwich with integrated strike face is denoted with s in figure 1.

In use, a projectile 6 may be directed towards the structure with the aim of penetrating through the structure and into the aircraft.

A top surface 7 may also be provided which may be an aluminium layer. This layer acts at the upper and outer casing of the structure and may become the floor of the aircraft cabin for example. This layer protects the structure and capture layer from wear and tear, damage and, for example, water/fluid ingress.

In one example the capture layer /spall liner is formed from an ultra-high molecular weight polyethylene material such as Dyneema ^{®} manufactured by DSM. Dyneema is a synthetic fibre (UHMWPE) with extremely high tensile strength.

Importantly, the capture layer / spall liner does not have any structural characteristics within the panel; it is purely in position to capture the projectile 6 (or part thereof) which penetrates the structure. By combining functionalities of ballistic protection and structural capabilities instead of separating them, the total solution will be lighter and occupy less space.

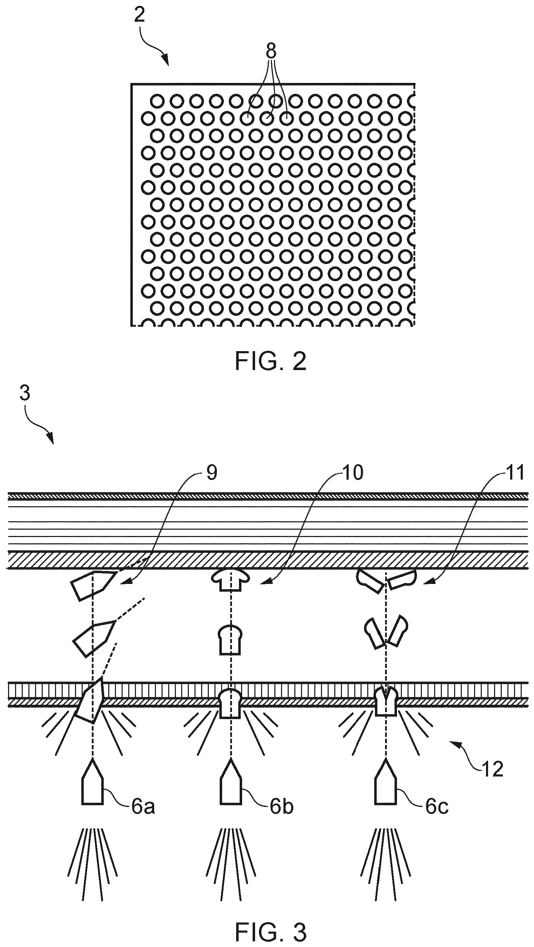

Figure 2 shows the strike face layer 2 in isolation with an array 8 of circular holes penetrating through the strike face (as also shown in figure 1). Any suitable distribution of holes or apertures (depending on the threat (projectile type and calibre) for which the structural armour is designed) may be used depending on the in plane stiffness required for the strike face surface (this being part of the structural sandwich).

In effect the strike face or layer has two distinct purposes. First, the surface acts as one side of the multi-layer sandwich or laminate structure that provides the load bearing strength for the aircraft floor (in one example). Secondly the surface acts as the first component of a multicomponent or multi-layer anti-ballistic panel.

Figure 3 illustrates three projectiles 6a 6b 6c approaching the strike face apertures.

The projectiles can be comprised of different compositions (e.g. armor piercing, ball and combinations thereof). Depending on the projectile type and calibre, different responses can be expected upon impact with the perforated strike face layer. AP (hard, brittle) projectiles 6a or jacketed projectiles with e.g. hardened steel tips have the tendency to start tumbling 9 when loaded asymmetrically, effectively increasing the surface area of the projectile with respect to the rest of the structural panel and capture layer/spall liner.

This subsequently increases the effectivity of the capture layer/spall liner to defeat /stop the projectile. Softer and ductile projectiles (ball) 6b, 6c have the tendency to either deform heavily upon impact with the strike face layer 10 or split into multiple deformed parts 11 depending on impact location with respect to aperture location. As with AP projectiles, this increases the projectile surface area with respect to the capture layer/spall liner and increases the effectiveness of the capture layer/spall liner to defeat /stop the projectile. The aperture size and array 8 design should be chosen specifically for anticipated projectile type (or range thereof) threats. Upon impact, the strike face layer is damaged and fragments may either be expelled from the panel 12 or enter the panel core and are caught by the capture layer/ spall liner as well.

In effect a multi-stage process is achieved through the structure to arrest the projectile whilst maintaining structure strength of the structure around the penetration path of the projectile. The projectile can be stopped from penetrating all of the way through the panel and simultaneously the panel acts as a continuous structural part of the fuselage.

A combination of these reinforcement arrangements may equally be used.

The inventor has established that any suitable shape of perforation may be used, for example, circular holes, triangular holes, slots, squares, octagonal holes or the like. In each example, distributing these shapes in a repeating pattern has the same effect on the in-plane stiffness as long as the correct amount of the isotropic material is removed and the pattern is repeated enough for the face to be considered quasi-isotropic.

Circular holes or perforations provide particular advantages, including:
1. Ease of production. Aircraft grade titanium in one specific floor panel design (Ti-6Al-4V), is difficult to process/machine. Machining (drilling) of the holes provides a cost effective solution.
2. The distribution of stress. Since the metal strike face layer is used as both a strike face and also a fully structural face, the distribution of stress through this layer (as part of the composite) has to be taken into account. Using round holes instead of squares, triangles etc, removes the stress concentrations (Kts) around sharp hole edges. The circular hole version is therefore considered to be stronger.

It has further been established that the structure could be conveniently manufactured all, or in part, using additive manufacturing processes. This advantageously allows the reinforcement (metal strike face) layer to be fully optimised for both structural strength and additionally an ability to further disrupt the projectile's path.

For example one of the following technique could be used:
Powder bed fusion methods
Direct metal laser sintering (DMLS)
Electron beam melting (EBM)
Selective laser melting (SLM)
Selective laser sintering (SLS)
Direct metal wire deposition
Direct metal powder deposition

Advantages of the present invention over the art include, but are not limited to:
- an armoured, structural composite panel which is applicable for use as floor panels, as the fuselage, cockpit enclosure or any other structural part of a fixed wing aircraft or helicopter that needs ballistic protection
- it can be made lighter (areal weight) than the current gold standard for the intended range of threats with equivalent structural performance; and
- occupies less space than a structural panel with add-on armor.

## Claims

1. An anti-ballistic aerospace structure, said structure (1) comprising a strike layer (2) defining an outwardly facing surface and an opposing capture layer (3) defining an inwardly facing surface and an intermediate structural layer (4) arranged between the strike layer (2) and capture layer (3), wherein the intermediate structural layer (4) is spaced relative to the strike layer (2) to define a space (d) between the intermediate structural layer and the strike layer, said space (d) comprising one or more reinforcement elements (5), wherein the strike layer, the intermediate structural layer and the one or more reinforcement elements together form a sandwich-structured composite(s) and wherein the strike layer (2) is formed of a fibre reinforced plastic laminate comprising at least one metallic layer, wherein the metallic layer comprises a plurality of apertures (8) passing all the way through the metallic layer.

2. A structure as claimed in claim 1, wherein the apertures are in the form of a plurality of distributed circular perforations extending across the metallic layer.

3. A structure as claimed in any preceding claim, wherein the metallic layer is embedded on one or both sides between one or more fibre reinforced plastic layers.

4. A structure as claimed in claim 3, wherein the fibre reinforced plastic layer is a carbon fibre reinforced plastic layer.

5. A structure as claimed in any preceding claim, wherein the capture layer comprises an ultra-high molecular weight polyethylene material.

6. A structure as claimed in any preceding claim, wherein the intermediate structural layer is formed of a fibre reinforced plastic material.

7. A structure as claimed in any preceding claim, wherein the one or more reinforcement elements is in the form of a plurality of ribs extending between the strike layer and the intermediate structural layer.

8. A structure as claimed in any preceding claim, wherein the one or more reinforcement elements is in the form of a foam or honeycomb core material.

9. A structure as claimed in any preceding claim, wherein the strike layer, reinforcement elements and intermediate structural layer are co-cured layers within the structure, together forming a sandwich-structured composite.

10. A method of forming an anti-ballistic aerospace structure, said structure comprising a strike layer defining an outwardly facing surface and an opposing capture layer defining an inwardly facing surface and an intermediate structural layer arranged between the strike layer and capture layer, wherein the intermediate structural layer is spaced relative to the strike layer to define a space between the intermediate structural layer and the strike layer, said space comprising one or more reinforcement elements, wherein the strike layer, the intermediate structural layer and the one or more reinforcement elements together form a sandwich-structured composite and wherein the strike layer is formed of a fibre reinforced plastic laminate comprising at least one metallic layer, wherein the metallic layer comprises a plurality of apertures passing all the way through the metallic layer; wherein the method comprises the steps of laying-up the strike layer to incorporate the metallic layer and co-curing the strike layer, the reinforcement elements and intermediate structural layer of the structure.

11. A method as claimed in claim 10, further comprising the step of bonding the capture layer to the structure intermediate layer of the co-cured structure.

12. A method as claimed in claim 11, further comprising the step of bonding a backing layer to the inwardly facing surface of the capture layer.

13. A structure or method as claimed in any preceding claim, wherein the layers are non-planar in shape but parallel to each other.

14. A fibre reinforced plastic structure comprising a strike layer defining an outwardly facing surface and an opposing capture layer defining an inwardly facing surface and an intermediate structural layer arranged between the strike layer and capture layer, wherein the intermediate structural layer is spaced relative to the strike layer to define a space between the intermediate structural layer and the strike layer, said space comprising one or more reinforcement elements, wherein the strike layer, the intermediate structural layer and the one or more reinforcement elements together form a sandwich-structured composite and wherein the strike layer is formed of a fibre reinforced plastic laminate comprising at least one metallic layer, wherein the metallic layer comprises a plurality of apertures passing all the way through the metallic layer.

## Patentansprüche

1. Antiballistische Luft- und Raumfahrtstruktur, wobei die Struktur (1) eine Angriffsschicht (2),
die eine nach außen weisende Oberfläche definiert, und eine gegenüberliegenden Fangschicht (3),
die eine nach innen weisende Oberfläche definiert, und eine strukturelle Zwischenschicht (4), die zwischen der Angriffsschicht (2) und der Fangschicht (3) angeordnet ist, umfasst,
wobei die strukturelle Zwischenschicht (4) relativ zu der Angriffsschicht (2) beabstandet ist, um einen Raum (d) zwischen der strukturellen Zwischenschicht und der Angriffsschicht zu definieren, wobei der Raum (d) ein oder mehrere Verstärkungselemente (5) umfasst, wobei die Angriffsschicht, die strukturelle Zwischenschicht und das eine oder die mehreren Verstärkungselemente zusammen einen oder mehrere sandwichartig strukturierte Verbundstoff(e) bilden und wobei die Angriffsschicht (2) aus einem faserverstärkten Kunststofflaminat gebildet ist, das wenigstens eine metallische Schicht umfasst,
wobei die metallische Schicht eine Vielzahl von Öffnungen (8) umfasst, die die metallische Schicht vollständig durchdringen.

2. Struktur nach Anspruch 1, wobei die Öffnungen in der Form einer Vielzahl von verteilten kreisförmigen Perforationen vorliegen, die sich über die metallische Schicht erstrecken.

3. Struktur nach einem der vorstehenden Ansprüche, wobei die metallische Schicht auf einer oder beiden Seiten zwischen einer oder mehreren faserverstärkten Kunststoffschichten eingebettet ist.

4. Struktur nach Anspruch 3, wobei die faserverstärkte Kunststoffschicht eine kohlenstofffaserverstärkte Kunststoffschicht ist.

5. Struktur nach einem der vorstehenden Ansprüche, wobei die Fangschicht ein Polyethylenmaterial mit ultrahohem Molekulargewicht umfasst.

6. Struktur nach einem der vorstehenden Ansprüche, wobei die strukturelle Zwischenschicht aus einem faserverstärkten Kunststoffmaterial gebildet ist.

7. Struktur nach einem der vorstehenden Ansprüche, wobei das eine oder die mehreren Verstärkungselemente in der Form einer Vielzahl von Rippen vorliegen, die zwischen der Angriffsschicht und der strukturellen Zwischenschicht verlaufen.

8. Struktur nach einem der vorstehenden Ansprüche, wobei das eine oder die mehreren Verstärkungselemente in der Form eines Schaum- oder Wabenkernmaterials vorliegen.

9. Struktur nach einem der vorstehenden Ansprüche, wobei die Angriffsschicht, die Verstärkungselemente und die strukturelle Zwischenschicht gemeinsam gehärtete Schichten innerhalb der Struktur sind, die zusammen einen sandwichartig strukturierten Verbundstoff bilden.

10. Verfahren zur Herstellung einer antiballistischen Luft- und Raumfahrtstruktur, wobei die Struktur eine Angriffsschicht, die eine nach außen weisende Oberfläche definiert, und eine gegenüberliegende Fangschicht, die eine nach innen weisende Oberfläche definiert, und eine strukturelle Zwischenschicht, die zwischen der Angriffsschicht und der Fangschicht angeordnet ist, umfasst, wobei die strukturelle Zwischenschicht relativ zu der Angriffsschicht beabstandet ist, um einen Raum zwischen der strukturellen Zwischenschicht und der Angriffsschicht zu definieren, wobei der Raum ein oder mehrere Verstärkungselemente umfasst,
wobei die Angriffsschicht, die strukturelle Zwischenschicht und das eine oder die mehreren Verstärkungselemente zusammen einen sandwichartig strukturierten Verbundstoff bilden und wobei die Angriffsschicht aus einem faserverstärkten Kunststofflaminat gebildet ist, das wenigstens eine metallische Schicht umfasst, wobei die metallische Schicht eine Vielzahl von Öffnungen umfasst, die die metallische Schicht vollständig durchdringen;
wobei das Verfahren die Schritte des Auflegens der Angriffsschicht, um die metallische Schicht einzubauen, und des gemeinsamen Härtens der Angriffsschicht, der Verstärkungselemente und der strukturellen Zwischenschicht der Struktur umfasst.

11. Verfahren nach Anspruch 10, ferner umfassend den Schritt des Bindens der Fangschicht an die strukturelle Zwischenschicht der gemeinsam gehärteten Struktur.

12. Verfahren nach Anspruch 11, ferner umfassend den Schritt des Bindens einer Trägerschicht an die nach innen weisende Oberfläche der Fangschicht.

13. Struktur oder Verfahren nach einem der vorstehenden Ansprüche, wobei die Schichten eine nicht-planare Form, aber parallel zueinander, aufweisen.

14. Faserverstärkte Kunststoffstruktur umfassend eine Angriffsschicht, die eine nach außen weisende Oberfläche definiert, und eine gegenüberliegende Fangschicht, die eine nach innen weisende Oberfläche definiert, und eine strukturelle Zwischenschicht, die zwischen der Angriffsschicht und der Fangschicht angeordnet ist, wobei die strukturelle Zwischenschicht relativ zu der Angriffsschicht beabstandet ist, um einen Raum zwischen der strukturellen Zwischenschicht und der Angriffsschicht zu definieren, wobei der Raum ein oder mehrere Verstärkungselemente umfasst, wobei die Angriffsschicht, die strukturelle Zwischenschicht und das eine oder die mehreren Verstärkungselemente zusammen einen sandwichartig strukturierten Verbundstoff bilden und wobei die Angriffsschicht aus einem faserverstärkten Kunststofflaminat gebildet ist, das wenigstens eine metallische Schicht umfasst, wobei die metallische Schicht eine Vielzahl von Öffnungen umfasst, die die metallische Schicht vollständig durchdringen.

## Revendications

1. Structure aérospatiale antibalistique, ladite structure (1) comprenant une couche de frappe (2) définissant une surface tournée vers l'extérieur et une couche de capture (3) en regard
définissant une surface tournée vers l'intérieur et une couche structurelle intermédiaire (4) agencée entre la couche de frappe (2) et la couche de capture (3),
dans laquelle la couche structurelle intermédiaire (4) est espacée par rapport à la couche de frappe (2) pour définir un espace (d) entre la couche structurelle intermédiaire et la couche de frappe, ledit espace (d) comprenant un ou plusieurs éléments de renforcement (5), dans laquelle la couche de frappe, la couche structurelle intermédiaire et les un ou plusieurs éléments de renforcement forment ensemble un composite à structure en sandwich (s) et dans laquelle la couche de frappe (2) est formée d'un stratifié en plastique renforcé par des fibres comprenant au moins une couche métallique,
dans laquelle la couche métallique comprend une pluralité d'ouvertures (8) traversant la couche métallique de part en part.

2. Structure selon la revendication 1, dans laquelle les ouvertures se présentent sous la forme d'une pluralité de perforations circulaires distribuées s'étendant sur toute la couche métallique.

3. Structure selon une quelconque revendication précédente, dans laquelle la couche métallique est incluse sur un côté ou les deux côtés entre une ou plusieurs couches de plastique renforcé par des fibres.

4. Structure selon la revendication 3, dans laquelle la couche de plastique renforcée par des fibres est une couche de plastique renforcée par des fibres de carbone.

5. Structure selon une quelconque revendication précédente, dans laquelle la couche de capture comprend un matériau en polyéthylène de poids moléculaire ultra élevé.

6. Structure selon une quelconque revendication précédente, dans laquelle la couche structurelle intermédiaire est formée d'une matière plastique renforcée par des fibres.

7. Structure selon une quelconque revendication précédente, dans laquelle le ou les éléments de renforcement se présentent sous la forme d'une pluralité de nervures s'étendant entre la couche de frappe et la couche structurelle intermédiaire.

8. Structure selon une quelconque revendication précédente, dans laquelle le ou les éléments de renforcement se présentent sous la forme d'un matériau central en mousse ou en nid d'abeille.

9. Structure selon une quelconque revendication précédente, dans laquelle la couche de frappe, les éléments de renforcement et la couche structurelle intermédiaire sont des couches cuites conjointement à l'intérieur de la structure, formant ensemble un composite structuré en sandwich.

10. Procédé de formation d'une structure aérospatiale antibalistique, ladite structure comprenant une couche de frappe définissant une surface tournée vers l'extérieur et une couche de capture en regard définissant une surface tournée vers l'intérieur et une couche structurelle intermédiaire agencée entre la couche de frappe et la couche de capture, dans lequel la couche structurelle intermédiaire est espacée par rapport à la couche de frappe pour définir un espace entre la couche structurelle intermédiaire et la couche de frappe, ledit espace comprenant un ou plusieurs éléments de renforcement,
dans lequel la couche de frappe, la couche structurelle intermédiaire et les un ou plusieurs éléments de renforcement forment ensemble un composite à structure en sandwich et dans lequel la couche de frappe est formée d'un stratifié en plastique renforcé par des fibres comprenant au moins une couche métallique, dans lequel la couche métallique comprend une pluralité d'ouvertures traversant de part en part la couche métallique ;
dans lequel le procédé comprend les étapes de dépôt de la couche de frappe pour incorporer la couche métallique et de cuisson conjointe de la couche de frappe, des éléments de renforcement et de la couche structurelle intermédiaire de la structure.

11. Procédé selon la revendication 10, comprenant en outre l'étape de liaison de la couche de capture à la couche intermédiaire de structure de la structure conjointement cuite.

12. Procédé selon la revendication 11, comprenant en outre l'étape de liaison d'une couche de support sur la surface tournée vers l'intérieur de la couche de capture.

13. Structure ou procédé selon une quelconque revendication précédente, dans lesquels les couches sont de forme non plane mais parallèles les unes aux autres.

14. Structure en plastique renforcé par des fibres comprenant une couche de frappe définissant une surface tournée vers l'extérieur et une couche de capture en regard définissant une surface tournée vers l'intérieur et une couche structurelle intermédiaire agencée entre la couche de frappe et la couche de capture, dans laquelle la couche structurelle intermédiaire est espacée par rapport à la couche de frappe pour définir un espace entre la couche structurelle intermédiaire et la couche de frappe, ledit espace comprenant un ou plusieurs éléments de renforcement, dans laquelle la couche de frappe, la couche structurelle intermédiaire et les un ou plusieurs éléments de renforcement forment ensemble un composite à structure en sandwich et dans laquelle la couche de frappe est formée d'un stratifié en plastique renforcé par des fibres comprenant au moins une couche métallique, dans laquelle la couche métallique comprend une pluralité d'ouvertures traversant de part en part la couche métallique.
